# EUROPEAN PATENT SPECIFICATION

(11) **EP 2 875 661 B1**
(45) Date of publication and mention of the grant of the patent: **26.09.2018**
(21) Application number: 12737500.4
(22) Date of filing: 19.07.2012
(51) Int. Cl.: H04W 8/18, H04W 40/02, H04W 88/06, H04W 40/12, H04W 48/18, H04L 12/707

(54) **TECHNIQUE FOR MANAGING SUBSCRIPTIONS**
TECHNIK ZUR VERWALTUNG VON ABONNEMENTS
TECHNIQUE POUR GÉRER ABONNEMENTS

(43) Date of publication of application: 27.05.2015
(73) Proprietor: Telefonaktiebolaget LM Ericsson (publ), 164 83 Stockholm (SE)
(72) Inventor: LINDOFF, Bengt, SE-237 35 Bjärred (SE)
(74) Representative: Ericsson
(86) International application number: PCT/EP2012/003042
(87) International publication number: WO 2014/012562

(56) References cited:
- EP-A1- 2 469 897
- GB-A- 2 453 520
- VCTOR-M SEMPERE-PAY ET AL: "Integrated sensor and management system for urban waste water networks and prevention of critical situations", COMPUTERS ENVIRONMENT AND URBAN SYSTEMS, NEW YORK, NY, US, vol. 36, no. 1, 5 July 2011 (2011-07-05), pages 65-80, XP028436877, ISSN: 0198-9715, DOI: 10.1016/J.COMPENVURBSYS.2011.07.001 [retrieved on 2011-07-19]

## Description

### Technical Field

The present disclosure generally relates to managing connection states of at least two subscriptions. Specifically, a technique for managing connection states of at least two subscriptions is disclosed, wherein each subscription is associated with a dedicated connection, wherein the associated connection of a first subscription is in a connected state, and wherein the associated connection of a second subscription is in an inactive or detached state.

### Background

The number of Internet connections using mobile broadband continues to rise. With the introduction of flat rate - i.e. fixed price for an (almost) free data amount (or at least reasonable large, around 20 GB/month - in combination with high performance modems for 3GPP High Speed Packet Access (HSPA, or HS) or 3GPP Long Term Evolution (LTE) cellular systems, many users actually skip fixed line subscriptions, such as Asynchronous Digital Subscriber Lines (ADSLs), and only rely e.g. on a Mobile Broadband (MBB) connection.

Recently, there have been a number of 3^{rd} Generation (3G) and 4^{th} Generation (4G) routers out on the market, where the user uses a subscription - e.g. by plugging in a Subscriber Identity Module (SIM) into the router, or into a modem assigned to the router (e.g. via Universal Serial Bus, USB) - and then via a short range communication system (such as Wireless Local Area Network, WLAN) included in the router, the entire household of the user may be connected to the Internet.

### Problems with existing solutions not realized by the prior art

However, such routers are not designed for traditional (e.g. circuit switched) voice connections, but only for packet switched data services. Accordingly, due to increased demand of MBB and the huge explosion of smart phone usage, a so-called stall of the MBB connection, or at least a considerable degradation, may occur due to high load.

The router may be stationary and placed in a site with good signal reception, giving - under ordinary conditions - about 10 or more Mb/s in the Downlink direction. However, sometimes there is high load due to high usage of the current cell (e.g. in the radio spectrum), necessitating a scheduler to restrict the maximum throughput (TP) below a maximum possible TP (e.g. from a radio channel quality point of view).

In other cases, there might be a problem (such as high load) in the so-called backhaul (meaning e.g. lines or connections between a base station/radio access network and the core network) that could limit the throughput. As another example, there could be software/hardware problems in the overall network, making the throughput low for the user. If the TP reduction becomes very high (for example, TP is reduced below 0.5 Mb/s), the user experience in terms of e.g. video streaming services might deteriorate to a considerable degree (or might not even be performed at all).

One possible solution might reside in introducing redundancy in the router, by providing the router with possibilities for a fixed (e.g. ADSL or similar) connection as well. However, then a fixed subscription would be needed, so such a solution would not properly address the problem with router (or other device) having MBB only.

Another problem with possible solutions with a router having a single operator subscription resides in installing the router e.g. in a vehicle. Then, the TP will vary depending on the coverage (and depending also on the cell planning of the operator), and sometimes, the router will be handed over to low throughput systems (such as General Packet Radio Service/Enhanced GPRS, GPRS/EGPRS), in case coverage for LTE/HS cannot be provided anymore. On the other hand, another operator might have performed another cell planning (or larger coverage with high TP systems in a certain area), so that in low TP areas with operator A, high TP might be achieved with operator B. In such a solution, the above-described problem could have been solved by "manually" changing the subscription (e.g. SIM card) in the router. The time for changing will be substantial, and there is a risk that the coverage will have changed again upon completion of connection with the new subscription (e.g. SIM).

Document "Integrated sensor and management system for urban waste water networks and prevention of critical situations", Victor-M. Sempere-Payá et.al., Computers, Environment and Urban Systems, vol. 36 in 2012, pages 65 to 80, may be construed to disclose design and implementation of improvements to the monitoring system of an urban waste water network, resulting in more efficient management of the system. To achieve this objective, the latest communications technology has been incorporated into heterogeneous networks and sensor systems. This technology includes mobile systems, which take measurements and transmit images in real time, an intelligent platform for processing and management of variables, and the implementation of wireless sensor networks (WSNs) designed with specific protocols and tools that allow the rapid deployment of the network and allow measurements to be taken in emergency situations. The sensors in this type of installation are extremely important for the management of the system as they allow to collect information and make decisions with sufficient time to deal effectively with critical situations such as flooding or overloading of the waste water system, or environmental problems such as dumping of possible pollutants, as well as to make the best use of the water cycle. The solution presented here automates large portions of the processes, minimizing the possibility of human error, and increasing the frequency and accuracy of the measurements taken, ensuring a robust communication system covering all the elements involved to provide ubiquity of information, and finally gives an application layer to manage the system and receive alerts.

### Summary

Accordingly, there is a need for an implementation of a scheme that avoids one or more of the problems discussed above, or other problems. In particular, in one embodiment, there is a need for wireless broadband routers/devices capable to overcome the problem as described above.

In other words, the present invention solves, for example, the problem of unreliable mobile broadband connections when relying on connection to only one particular operator. In particular, this applies at the household of the user (or during travel) when only relying on MBB without possibilities to connect to the Internet e.g. via a fixed internet connection.

According to the present invention, there are provided a method, an apparatus and a computer program product according to the independent claims. Developments are set forth in the dependent claims.

Preferably, there is provided a method for managing connection states of at least two subscriptions in a routing apparatus, wherein each subscription is associated with a dedicated connection, wherein the associated connection of a first subscription is in a connected state, wherein the associated connection of a second subscription is in an inactive or detached state, and wherein the method is performed in the routing apparatus and comprises the steps of monitoring, for a first subscription, at least one parameter indicative of a status of the associated connection; determining whether the at least one parameter fulfils a condition; and if the determining step is affirmative, disconnecting the associated connection for the first subscription to the inactive or detached state, and initiating, for the second subscription, the associated connection to the connected state. As said, this provides for an optimized automatic switching between the two subscriptions depending on the status (of the first subscription).

Preferably, in a first example, the at least one parameter may be associated with at least one of a status of a cellular connection, a data rate, a geographical position, a predetermined data amount associated with the first subscription, and a hardware, HW, or software, SW, status of a modem of the routing apparatus.

Preferably, in a second example, if the at least one parameter is associated with the status of the cellular connection, the at least one parameter may be at least one of: channel quality, in which case the condition is a measure of the channel quality dropping beneath a given threshold; an inter-radio access technology handover, IRAT HO, in which case the condition is a transition of the RAT from Long Term Evolution/High Speed, LTE/HS, to Global System for Mobile Communications, GSM, General Packet Radio Service, GPRS, or Enhanced GPRS, EGPRS; and Radio Link Failure, RLF, monitoring, in which case the condition is a value "RFL true". Preferably, in the case of the at least one parameter being channel quality, a measure for the channel quality may be at least one of a Received Signal Strength Indicator, RSSI; a Received Signal Code Power, RSCP; a signal-to-noise ratio, SNR; a signal-to-interference ratio; SIR; a signal-to-interference-plus-noise ratio; SNIR; a Reference Signal Received Power, RSRP; a Reference Signal Received Quality, RSRQ; and a Channel Quality Indicator, CQI. In this way, it is ascertained that the switching condition always fits the actual situation best.

Preferably, in a third example, if the at least one parameter is associated with a data rate, the at least one parameter may be a data rate delivered from a communication unit to a short range communication unit within the routing apparatus, in which case the condition may be a measure of the data rate dropping beneath a given threshold. In this way, it is ascertained that the switching is performed dynamically depending on the actual situation.

Preferably, the given threshold for channel quality data rate may be based on historical information on traffic over the associated connection of the first subscription. If so, the given threshold may be further based on position information of the routing apparatus.

Preferably, in a fourth example, the at least one parameter may be associated with respective throughputs associated with the associated connections of the first and second subscriptions, and the condition may be a throughput associated with the second subscription being higher than a throughput associated with the first subscription. preferably, the throughput may be further based on position information of the routing apparatus. Moreover, the associated throughput of the first and second subscriptions may be further based on information in a data base. In this way, it is further ascertained that the switching is performed dynamically depending on the actual situation.

Preferably, in a fifth example, if the at least one parameter is associated with the HW or SW status of the modem, the at least one parameter may be an operational state of the modem, in which case the condition may be a value "crash state = true". In this way, next to the proper switching, a fail-operational scheme is provided.

Preferably, in a sixth example, the at least one parameter may be associated with respective predetermined data amounts associated with the associated connections of the first and second subscriptions, and the condition may be the predetermined data amount associated with the first subscription having been reached. In this way, it is ascertained that each subscription is apportioned not more than the designated amount of data.

Preferably, in a seventh example, the disconnecting step may involve a connection release procedure. Alternatively or in addition, the connecting step may involve a connection setup procedure. In this way, the present invention may be practised more efficiently by exploiting reusability of existing standard measures (here: connection release/setup) as far as possible.

Preferably, there is provided a computer program product comprising program code portions for performing the method of the first aspects (and its refinements) when the computer program product is executed on one or more computing devices. Preferably, the computer program product may be stored on a computer readable recording medium.

It is to be noted that a network entity (or several entities) may implement any of the technical details set forth for the method aspects herein, and thus achieves the same advantages. In other words, the network entity (or entities) may comprise components adapted to perform any of the method steps disclosed herein. Preferably, there is a routing apparatus comprising one or more of such entities.

Preferably, the apparatus further comprises an internal communication unit. Alternatively, the apparatus is preferably connected to at least two external modems each associated with a respective subscription. Preferably, the disconnecting and initiating operations may involve switching from a first external modem to a second external modem.

Preferably, the apparatus further comprises means for accommodating at least two Subscriber Identity Module, SIM, cards. Alternatively, there may preferably be accommodated at least two soft Subscriber Identity Modules, SIMs. As another alternative, there may preferably be accommodated at least one virtual Subscriber Identity Modules, SIMs. In the latter case, a (e.g. physical) SIM may be preferably accommodated in the apparatus and may constitute the virtual SIM for an external communication device which is associated with the SIM.

### Brief Description of the Drawings

The embodiments of the technique presented herein are described herein below with reference to the accompanying drawings, in which:
Fig. 1 shows components comprised in an exemplary device embodiment realized in the form of router;
Fig. 1A shows a network system employing a first example of the exemplary device embodiment of the present invention;
Fig. 1B shows a network system employing a second example of the exemplary device embodiment of the present invention;
Fig. 2 shows a method embodiment which also reflects the interaction between the components of the device embodiment;
Fig. 2A shows a first exemplary embodiment of the method embodiment;
Fig. 2B shows a second exemplary embodiment of the method embodiment;
Fig. 2C shows a third exemplary embodiment of the method embodiment;
Fig. 2D shows a fourth exemplary embodiment of the method embodiment;
Fig. 2E shows a fifth exemplary embodiment of the method embodiment; and
Fig. 2F shows a sixth exemplary embodiment of the method embodiment.

### Detailed Description

In the following description, for purposes of explanation and not limitation, specific details are set forth (such as particular signalling steps) in order to provide a thorough understanding of the technique presented herein. It will be apparent to one skilled in the art that the present technique may be practised in other embodiments that depart from these specific details. For example, the embodiments will primarily be described in the context of a HS/LTE-type communication system; however, this does not rule out the use of the present technique in other communication systems. Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein.

Without being restricted thereto, as an example, the present invention proposes a dual (Multi)-SIM Router/device which automatically adapts the connection to another operator (e.g. SIM) if the current connection experiences some difficulties. The switch may be performed seamlessly without any user interaction. The invention proposes, inter alia, switch triggers as will be described herein below. This said, the invention may cover dual radio, dual-SIM routers, i.e. routers capable of performing a simultaneous connection to both operators (or at least one active and one idle connection), single radio, dual-SIM routers enable to have both SIM in idle state (or Universal Mobile Telecommunications System Terrestrial Radio Access Network Registration Area paging channel (URA_PCH) or similar), or dual-SIM routers where the second SIM is detached (not registered in the NW) when the other is idle or active. Furthermore, the invention may also cover routers, where external modems are connected (via, for example, the USB or other standardized protocol) to the router. It is to be noted that the present invention is described in terms of a dual subscription or dual "Dual-SIM", but "Dual-SIM" should be interpreted as "Multi-SIM", in the sense that the invention also covers triple, quadruple SIM routers etc. Furthermore, the invention may cover physical SIM cards of any size, as well as soft-SIM solutions or virtual-SIM solutions.

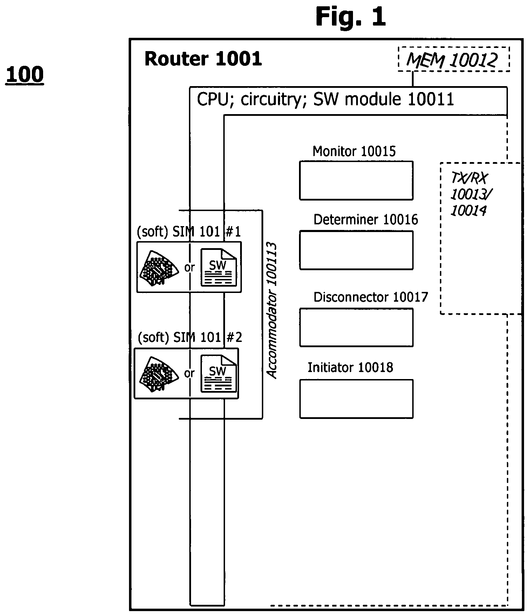

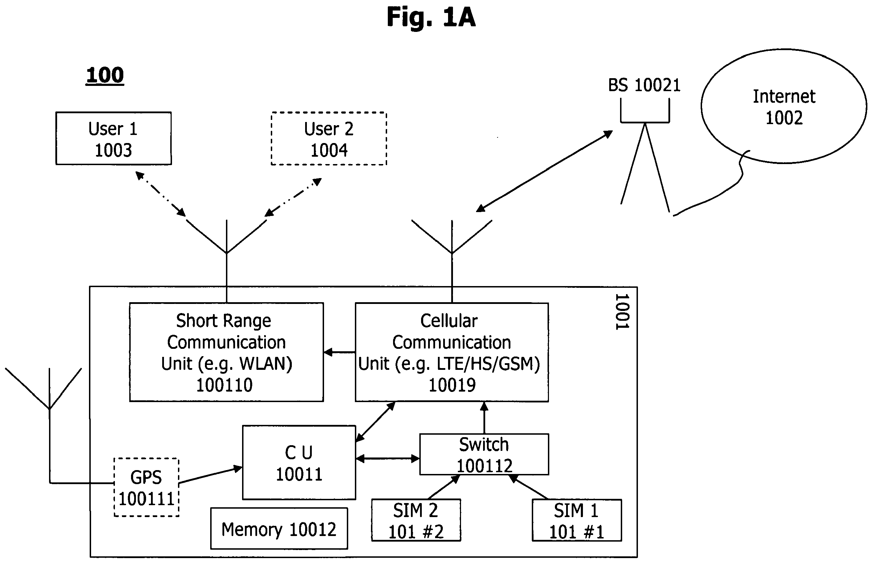

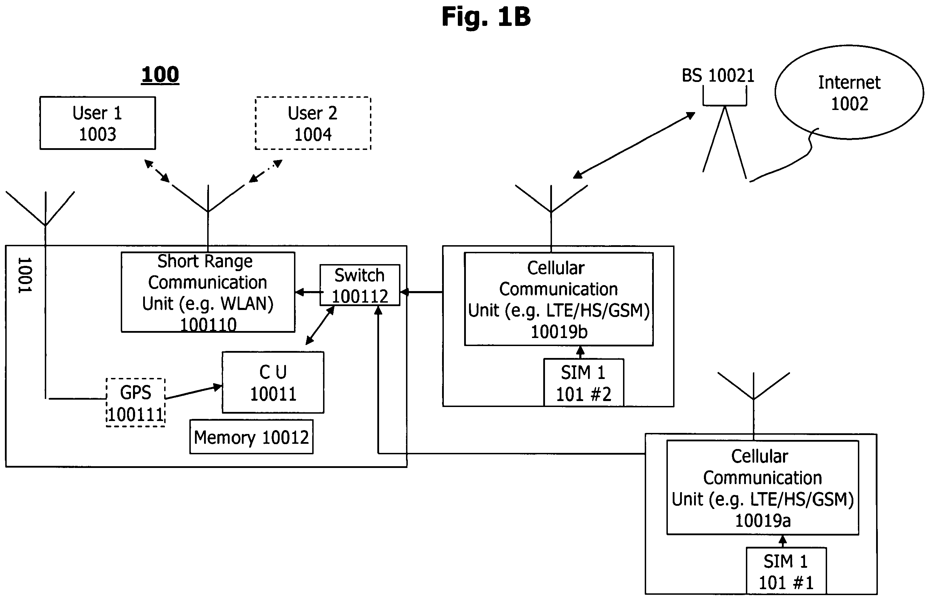

Figs. 1, 1A and 1B show a general embodiment of the router 1001 as well as two examples of the routers. As shown in Figs. 1, 1A and 1B, the router 1001 comprises a core functionality (e.g., one or more of a central processing unit (CPU), dedicated circuitry and/or a software module) 10011, an optional memory (and/or database) 10012, an optional transmitter 10013 and an optional receiver 10014. Moreover, the router 1001 comprises a monitor 10015, a determiner 10016, a disconnector 10017, an initiator 10018, a cellular communication unit (e.g. LTE, HS and/or GSM) 10019, a short range communication unit (e.g. WLAN) 100110, an optional GPS unit 100111, a switching unit 100112, and an optional accommodator 100113 (for accommodating either physical or soft SIMs 101).

As partly indicated by the dashed extensions of the functional block of the CPU 10011, the monitor 10015, the determiner 10016, the disconnector 10017, the initiator 10018, the cellular communication unit 10019, the short range communication unit 100110, the GPS unit 100111, the switching unit 100112, and the accommodator 100113 (of the Router 1001) as well as the memory 10012, the transmitter 10013 and the receiver 10014 may at least partially be functionalities running on the CPU 10012, or may alternatively be separate functional entities or means controlled by the CPU 10011 and supplying the same with information. For the router 1001, the transmitter and receiver components 10013, 10014 may be realized to comprise suitable interfaces and/or suitable signal generation and evaluation functions.

The CPU 10011 may be configured, for example, using software residing in the memory 10012, to process various data inputs and to control the functions of the memory 10012, the transmitter 10013 and the receiver 10013 (as well the monitor 10015, the determiner 10016, the disconnector 10017, the initiator 10018, the cellular communication unit 10019, the short range communication unit 100110, the GPS unit 100111, the switching unit 100112, and the accommodator 100113 (of the router 1001)). The memory 10012 may serve for storing program code for carrying out the methods according to the aspects disclosed herein, when executed by the CPU 10011.

It is to be noted that the transmitter 10013 and the receiver 10014 may be provided as an integral transceiver, as is indicated in Fig. 1. It is further to be noted that the transmitters/receivers 10013, 10014 may be implemented as physical transmitters/receivers for transceiving via an air interface or a wired connection (e.g., between the Router 1001 and a base station 10021 when they are embodied separate entities), as routing/forwarding entities/interfaces between network elements (e.g., between the Router 1001 and the base station 10021 when they are embodied as functionally adjacent entities), as functionalities for writing/reading information into/from a given memory area (e.g., between the Router 1001 and the base station 10021 when they are embodied as two (or more) logical units disposed on one physical unit) or as any suitable combination of the above. At least one of the above-described monitor 10015, determiner 10016, disconnector 10017, initiator 10018, cellular communication unit 10019, short range communication unit 100110, GPS unit 100111, switching unit 100112, and accommodator 100113 (of the router 1001), or the respective functionalities, may also be implemented as a chipset, module or subassembly.

Fig. 1A shows a network system employing a first example of the exemplary device embodiment of the present invention. As shown in Fig. 1A, as a non-limiting example, the router 1001 may be a dual-SIM router; moreover, the router 1001 may be connected to one or more users (or their respective terminals) 1003, 1004. Still further, the router 1001 may communication with said base station 10021, which base station may in turn serve as an access point to the Internet 1002. In this case, the router may have an internal modem (which may be constituted by the cellular communication unit 10019), and hence also the accommodator 10013 for supporting (at least) two SIM cards 101. The router 1001 may further comprise the short range wireless communication unit 100110 (employing e.g. WLAN, Bluetooth etc.), the switch unit 100112 for switching to the SIM to be used, and a control unit (or CPU) 10011 controlling e.g. the switch unit 100112 (note that the switch unit 100112 may be based on connection release and connection setup procedures). The control unit 10011 may utilize information from the connection and from the cellular communication unit 10019 for setting the SIM switch unit 100112. Optionally, the router 1001 may have the GPS module or other positioning unit device 100111. As said, the router 1001 may also have the memory 10012 for storing data bases according to the description herein above and herein below.

Fig. 1B shows a network system employing a second example of the exemplary device embodiment of the present invention. As shown in Fig. 1B, as a non-limiting example, the router 1001 may be the dual-SIM router. Here, the router 1001 may have two externally connected modems (boxes surrounding the cellular communication units 10019a and 10019b) (e.g. via USB). Note that the switch unit 100112 may be based on connection release and connection setup procedures). Apart therefrom, reference signs identical in Figs. 1A and 1B designate the same or functionally similar entities.

It is to be noted that, unless the dual modem functionality according to Fig. 1B is used, enabling SIM 101 #2 typically requires a short time (e.g. between 1 and 2 seconds) per cell search, and a network connection, which may - to some extent - halt the data flows coming from the router 1001. Preferably, the switching operation is not performed per second, but rather per minute, hour, day etc., so that the TP degradation due to interrupt may be neglected at least compared to the case of not performing the switch (which might result in lower or no TP, higher surfing prices etc.).

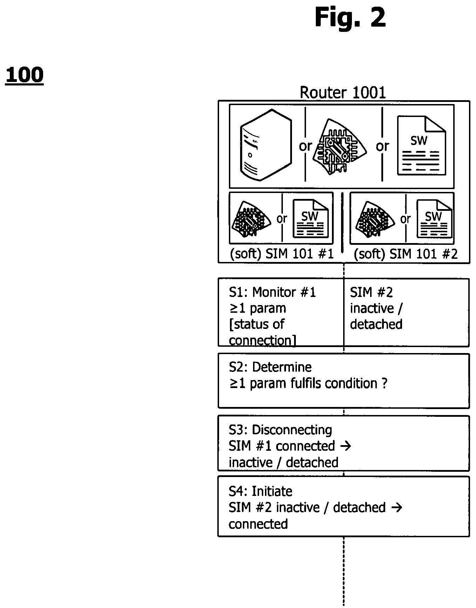

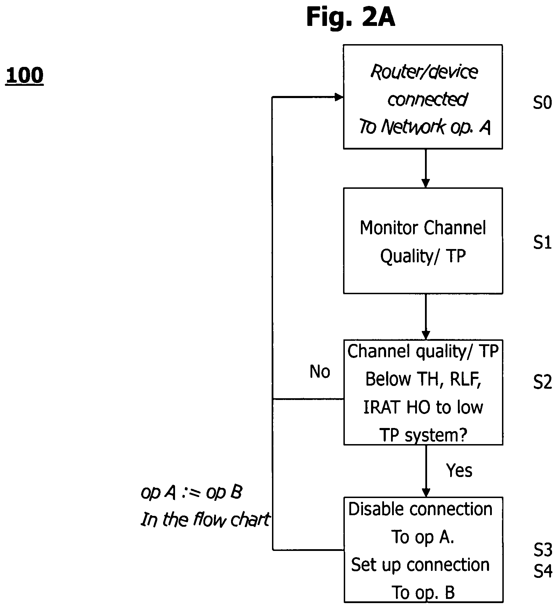

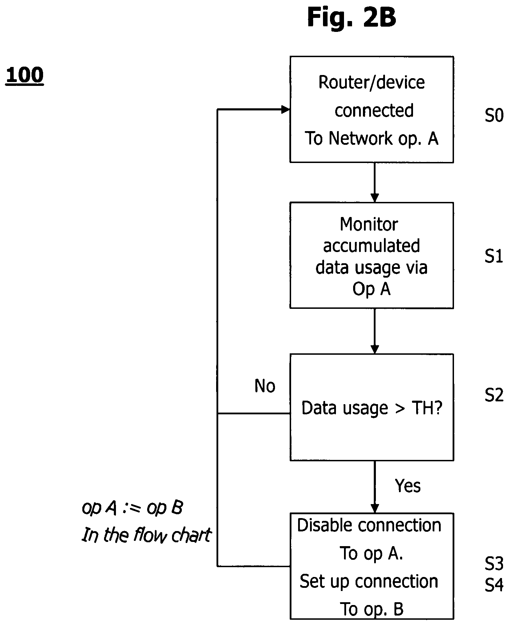

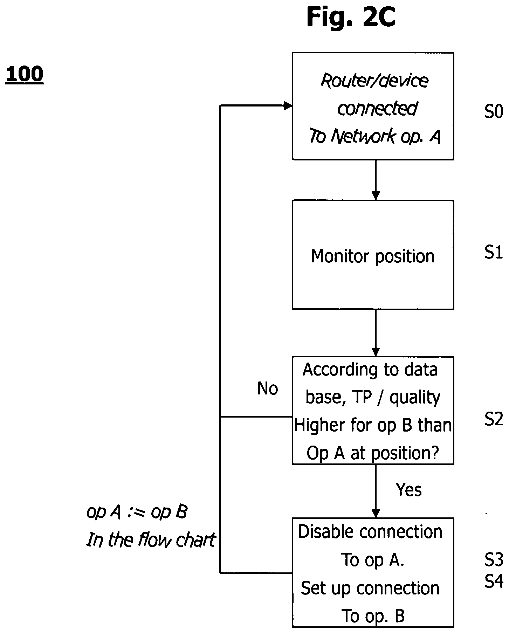

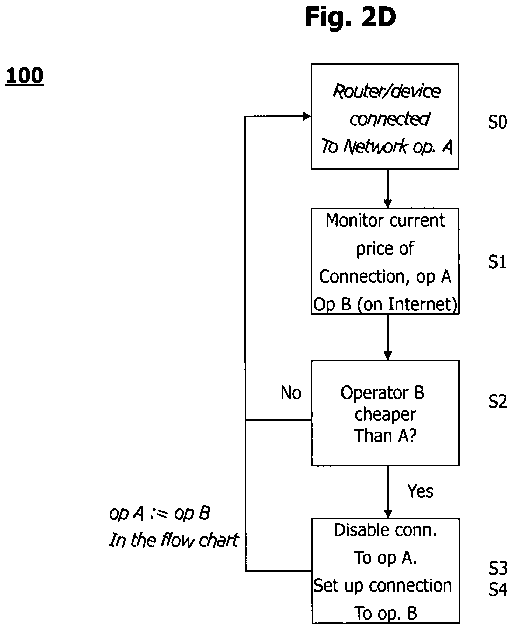

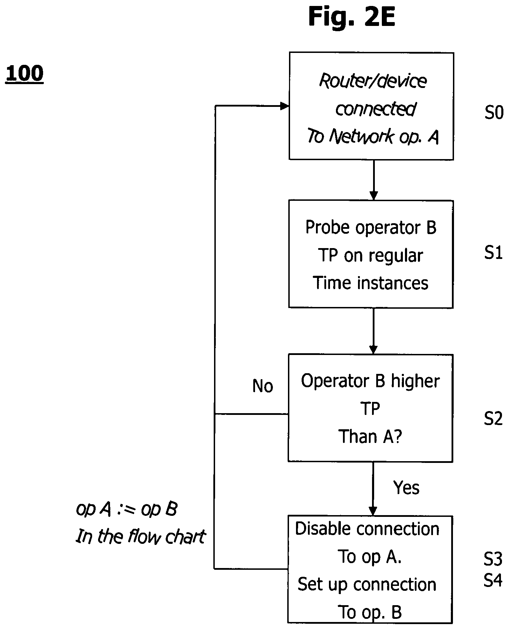

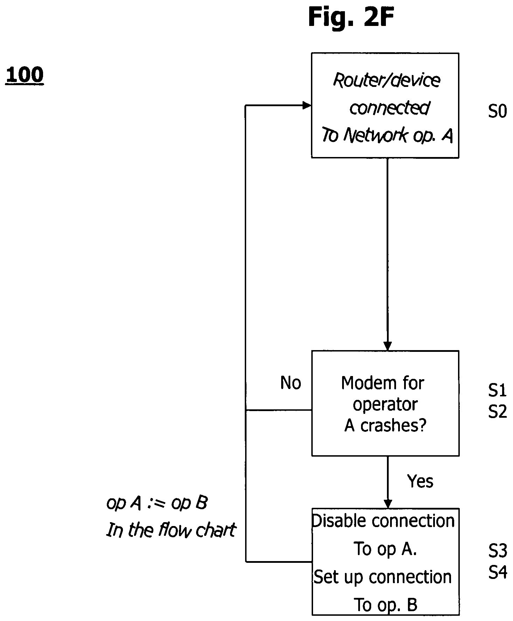

Fig. 2 illustrates an embodiment of a method for managing connection states of at least two subscriptions. In the signalling diagram of Fig. 2, time aspects between signalling are reflected in the vertical arrangement of the signalling sequence as well as in the sequence numbers. It is to be noted that the time aspects indicated in Fig. 2 do not necessarily restrict any one of the method steps shown to the step sequence outlined in Fig. 2. This applies in particular to method steps that are functionally disjunctive with each other. For instance, all steps S1 to S4 are shown to be timely generally flowing; however, especially steps S3 (disconnecting) and S4 (initiating) may or may not be carried out (directly) subsequently, timely overlapping, (generally) concurrently, and also (generally) simultaneously.

Referring still to the signalling diagram of Fig. 2 (to be read along with the router 1001 illustrated in Figs. 1, 1A and 1B), each subscription 101 may associated with a dedicated connection, wherein the associated connection of a first subscription 101 #1 is in a connected state, wherein the associated connection of a second subscription 101 #2 is in an inactive or detached state. For instance, in step S1, the monitor 10015 of the router 1001 monitors, for the first subscription 101 #1, at least one parameter indicative of a status of the associated connection. In step S2, the determiner 10016 of the router 1001 determines determining whether the at least one parameter fulfils a condition. Note that various implementations of the at least one parameter and the condition are feasible, which will be described herein below with respect to the first to sixth exemplary embodiment.

In step S3, if the determining step S2 is affirmative, the disconnector 10017 (possibly in conjunction with the switching unit 100112) of the router 1001 disconnects the associated connection for the first subscription 101 #1 to the inactive or detached state, and in step S4, the initiator 10018 (possibly in conjunction with the switching unit 100112) of the router 1001 initiates, for the second subscription 101 #2, the associated connection to the connected state. Note that the disconnecting step may involve a connection release procedure, and/or the connecting step may involve a connection setup procedure.

Moreover, as said, the at least one parameter may be associated with at least one of a status of a cellular connection, a data rate, a geographical position, a predetermined data amount associated with the first subscription, and a hardware, HW, or software, SW, status of a modem 10019, 10019a, 1009b of the routing apparatus.

Fig. 2A shows a first exemplary embodiment of the method embodiment.

As shown in Figs. 1A, 1B and 2A, the router is in connection with a NW node 10021 (e.g. a base station, eNode B, Node B etc.) via the cellular communication unit 10019, 10019a, 10019b. It may be assumed that a connection with operator A is used (embodying to a preparatory step S0).

Then, the router 1001 (e.g. control unit 1001 in conjunction with the monitor 10015) may monitor the channel quality, or throughput. Channel quality could be, but is not limited to the RSSI, RSCP, Ec/Io or RSRP or RSRQ depending on current cellular standard, i.e. information typically available from the communication unit to the router (e.g. on the "application level" or layer). However, also lower layer information like SIR, CQI is covered by the embodiment (embodying the "monitoring" step S1).

The throughput may be the TP derived out from the communication unit 10019, 10019a, 10019b and fed to the short range communication unit 100110. The information is optionally stored in the database 10012. If the channel quality or TP drops below a threshold (which threshold may be derived based on historical data, the threshold could for instance be 0.1 * typically achieved TP, or a fixed TP threshold) for a certain time (measured by a timer, not shown) (embodying the "determining" step S2), the connection to operator A may be disabled (e.g. standard connection release operation) (embodying the "disconnecting" step S3), and the SIM 101 #2 for operator B may be enabled and in-sync as well as a connection setup (e.g. according to known procedures) to operator B may be performed (embodying the "initiating" step S4).

Optionally, the router 1001 may utilize a GPS unit 100111 for correlating the position to historical data. For instance, in case of a stationary router (the most common use case), large amount of data can be recorded for determination of normal TP and thereby the "low TP" threshold.

Note that in this embodiment, step S2 may also cover the case that a Radio Link Failure (RLF) is detected (indicating out-of-coverage) or that an IRAT Handover to a lower TP system (e.g. GPRS or EGPRS) is initiated.

In other words, low average throughput (TP) may be a switching condition. If the TP is much lower than historical data indicates, a SIM switch may be performed. In one embodiment, the router may have a GPS and hence could tabulate average TP with a position (e.g. for a given SIM/operator) and thereby detect unusual low TP.

In other words, as still another alternative, bad coverage may be a switch trigger. In case the connection experiences an out-of-sync (e.g. Monitor Radio Link Failure, in connected state), or if the operator performs an IRAT handover, e.g. from LTE/HS to GPRS, then the connection may be switched to another SIM 101 #2.

Fig. 2B shows a second exemplary embodiment of the method embodiment. For the sake of brevity, step S0 corresponds to step SO in Fig. 2A, and the description is omitted. The same applies to steps S3 and S4.

In this embodiment, the router 1001 may store the accumulated data amount consumed using SIM/operator A (embodying step S1). The data amount may be DL application data (from the communication units), but also UL data or a combination of UL/DL is covered.

Then, if the data amount approaches or exceeds a threshold (embodying set S2), a SIM-switch may be performed (embodying steps S3 and S4). The threshold may be fixed, and pre-determined by the router 1001 or user, or be based on information the router 1001 has found on the Internet 1002, e.g. based on the operator and the specific subscription (i.e. covering the case that the router automatically determines the information on the Internet 1002), the predetermined allowed data threshold this subscription is allowed to use per unit time (e.g. month, day, week etc.) with "unlimited TP".

In other words, alternatively, a high amount of accumulated data has been consumed by the router 1001 for a first SIM (or operator) 101 #1. The router/device 1001 may have a data counter (implemented, for instance, by the monitor 10015) for each SIM 101, and if the counter reaches a value close to the limit of the subscription (for example, 20 GB/month), the subscription may afterwards only be allowed to use a lower TP (for example, 100 kb/s). The router might in one embodiment be able to detect the predetermined limit, based on search on the Internet 1002 and information about the current subscriptions.

Fig. 2C shows a third exemplary embodiment of the method embodiment. For the sake of brevity, step SO corresponds to step SO in Fig. 2A, and the description is omitted. The same applies to steps S3 and S4.

In this embodiment, the router 1001 (i.e., the monitor 10015) may be capable of monitoring the current position using a positioning unit 100111, such as the GPS unit (embodying step S1).

Then, based on a database for respective operators coverage and TP estimates (that either stored in the router 1001 or found on the Internet 1002 (e.g. on a webpage customized for this purpose), the control unit 1001 (determiner 10016) may determine which operator gives the highest TP at the current position (embodying step S2) and performs a SIM-switch, if necessary.

In other words, GPS and database over throughput coverage for different operators may be used as a switching condition. Once the position - together with the database - indicates a better TP/quality etc. for another operator, a SIM switch may be performed.

Fig. 2D shows a fourth exemplary embodiment of the method embodiment. For the sake of brevity, step SO corresponds to step S0 in Fig. 2A, and the description is omitted. The same applies to steps S3 and S4.

In this embodiment, the router 1001 (determiner 10016), e.g. by checking the Internet 1002, determines an operator having the cheapest data connection (embodying step S1). It is to be expected that data price could be changed per unit time, e.g. on a weekly, daily, or even hourly or per minute basis, depending on demand (since operators may buy capacity form a spectrum broker on demand).

By determining the currently cheapest operator, the router 1001 (control unit or CPU 1001) may decide if a SIM switch is needed (embodying step S2).

In other words, pricing may be used as a switching condition. In some embodiments, the price (e.g. currency unit per MB) may be flexible and vary per said unit time (weekly, daily, hourly etc.). The router 1001 may have a connection to the Internet 1002, and may e.g. via a broker system, determine the current cheapest connection and thereby switch the SIM.

Fig. 2E shows a fifth exemplary embodiment of the method embodiment. For the sake of brevity, step S0 corresponds to step S0 in Fig. 2A, and the description is omitted. The same applies to steps S3 and S4.

In this case, the router 1001 may instruct the non-used SIM/operator 101 #2 to connect to the network and may probe the channel quality (embodying step S1). Many different approaches can be envisioned. In case of dual (external) modems (see Fig. 1B), the control unit 10011 may enable a connection on regular basis to measure the TP (for instance, a data base with information about TP achieved at certain (GPS) positions or addresses) without interfering with the other (regular) connection. In case of single (internal) modem (see Fig. 1A), the probing might be performed by enabling SIM 101 #2 in situations when the connection via SIM 101 #1 is in a low active state (e.g. idle or URA_PCH in HS or Radio Resource Connected, RRC_connected with a long discontinuous reception, DRX, in LTE). In one example, the probing may be performed by SIM 101 #2 idle mode measurements in between SIM 101 #1 wake-up periods. In another example, in case of a very long DRX (e.g. around 2.56 sec), it might be possible for SIM 101 #2 to transit to active mode and perform more accurate RSRP/SIR measurements etc., and then to transit to sleep mode again prior to SIM 101 #1 wake-up.

For example, the control unit 10011/determiner 10016 of the router 1001, based on the measurements, may decide then whether a SIM switch is needed or not (embodying step S2).

In other words, probing techniques may be used as switching condition. The router 1001 may, e.g. on a regular basis, probe the other connection (e.g. second SIM 101 #2) to determine if better quality or throughput is achieved with the other SIM 101 #2.

Finally, Fig. 2F shows a sixth exemplary embodiment of the method embodiment. For the sake of brevity, step S0 corresponds to step S0 in Fig. 2A, and the description is omitted. The same applies to steps S3 and S4.

In this embodiment, the router 1001 (monitor 10015) may monitor whether an (external) modem 10019, 10019a, 10019b crashes (embodying steps S1 and S2). For instance, a modem response time (e.g. in response to a "ping") or an amount of data received from modem being basically "zero" (e.g. for a certain time period) may be used to detect a SW (or HW) crash.

If the modem has been detected to be in "crash state", a switch to the second SIM 101 #2 may be performed (embodying steps S3 and S4).

In other words, a modem crash (and/or SW failure) may be used as a switching condition. In case external modems 10019a, 10019b are connected to the router 1001, the router 1001 (disconnector 10017, initiator 10018, switch 100112) may switch to the second SIM 101 #2, if the modem associated with the first SIM crashes.

### Advantages of the Invention

With a multi-SIM/subscription router capable of automatically changing to the operator giving the best performance, the user experience as well as the reliability e.g. for MBB communication will increase, and thereby the chance arises for more users to abandon fixed Internet connections in favour of mobile Internet connections.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A method for managing connection states of at least two subscriptions in a routing apparatus (1001), wherein each subscription is associated with a dedicated connection, wherein the associated connection of a first subscription is in a connected state, wherein the associated connection of a second subscription is in an inactive or detached state, and wherein the method is performed in the routing apparatus and comprises the steps of:
- monitoring (S1), for a first subscription, at least one parameter indicative of a status of the associated connection;
- determining (S2) whether the at least one parameter fulfils a condition; and
- if the determining step is affirmative, disconnecting (S3) the associated connection for the first subscription to the inactive or detached state, and initiating (S4), for the second subscription, the associated connection to the connected state.

2. The method of claim 1, wherein:
i) the at least one parameter is associated with at least one of:
- a status of a cellular connection,
- a data rate,
- a geographical position,
- a predetermined data amount associated with the first subscription, and
- a hardware, HW, or software, SW, status of a modem (10019, 10019a, 1009b) of the routing apparatus; or
ii) the at least one parameter is associated with respective predetermined data amounts associated with the associated connections of the first and second subscriptions, and the condition is the predetermined data amount associated with the first subscription having been reached.

3. The method of claim 2, wherein:
i) if the at least one parameter is associated with the status of the cellular connection, the at least one parameter is at least one of:
- channel quality, in which case the condition is a measure of the channel quality dropping beneath a given threshold,
- an inter-radio access technology handover, IRAT HO, in which case the condition is a transition of the RAT from Long Term Evolution/High Speed, LTE/HS, to Global System for Mobile Communications, GSM, General Packet Radio Service, GPRS, or Enhanced GPRS, EGPRS, and
- Radio Link Failure, RLF, monitoring, in which case the condition is a value "RFL true"; or
ii) if the at least one parameter is associated with a data rate, the at least one parameter is a data rate delivered from a communication unit (10019) to a short range communication unit (100110) within the routing apparatus, in which case the condition is a measure of the data rate dropping beneath a given threshold; or
iii) if the at least one parameter is associated with the HW or SW status of the modem, the at least one parameter is an operational state of the modem, in which case the condition is a value "crash state = true".

4. The method of claim 3, wherein, for alternative i), in the case of the at least one parameter being channel quality, a measure for the channel quality is at least one of:
- a Received Signal Strength Indicator, RSSI;
- a Received Signal Code Power, RSCP;
- a signal-to-noise ratio, SNR;
- a signal-to-interference ratio; SIR;
- a signal-to-interference-plus-noise ratio; SNIR;
- a Reference Signal Received Power, RSRP;
- a Reference Signal Received Quality, RSRQ; and
- a Channel Quality Indicator, CQI.

5. The method of any one of claims 1, 2, alternative i), 3, alternatives i) and ii), and 4, wherein the given threshold for channel quality data rate is based on historical information on traffic over the associated connection of the first subscription.

6. The method of claim 5, wherein the given threshold is further based on position information of the routing apparatus.

7. The method of claim 1, wherein the at least one parameter is associated with respective throughputs associated with the associated connections of the first and second subscriptions, and the condition is a throughput associated with the second subscription being higher than a throughput associated with the first subscription.

8. The method of claim 7, wherein:
the throughput is further based on position information of the routing apparatus; and/or
the associated throughput of the first and second subscriptions is further based on information in a data base.

9. The method of any one of claims 1 to 8, wherein:
the disconnecting step involves a connection release procedure; and/or
the connecting step involves a connection setup procedure.

10. A computer program product comprising program code portions for performing the method of any one of the preceding claims when the computer program product is executed on one or more computing devices, preferably stored on a computer readable recording medium.

11. A routing apparatus (1001) for managing connection states of at least two subscriptions in the routing apparatus, wherein each subscription is associated with a dedicated connection, wherein the associated connection of a first subscription is in a connected state, wherein the associated connection of a second subscription is in an inactive or detached state, and wherein the routing apparatus comprises at least one processing means (10011) configured to:
- monitor, for a first subscription, at least one parameter indicative of a status of the associated connection;
- determine whether the at least one parameter fulfils a condition; and
- if the determining operation is affirmative, disconnect the associated connection for the first subscription to the inactive or detached state, and initiate, for the second subscription, the associated connection to the connected state.

12. The apparatus of claim 11,
i) further comprising an internal communication unit (10019); or
ii) wherein the apparatus is connected to at least two external modems (10019a, 10019b) each associated with a respective subscription.

13. The apparatus of claim 12, wherein, in alternative ii), the disconnecting and initiating operations involve switching from a first external modem to a second external modem.

14. The apparatus of any one of claims 11 to 13, further comprising:
means (100113) for accommodating at least two Subscriber Identity Module, SIM, cards; or
means (100113) for accommodating at least two soft Subscriber Identity Modules, SIMs.

15. The apparatus of claim 12, alternative ii), or claim 13, further comprising means (10018) for accommodating at least one virtual Subscriber Identity Modules, SIMs.

16. The apparatus of claim 15, wherein a SIM is accommodated in the apparatus and constitutes the virtual SIM for an external communication device (1003, 1004) which is associated with the SIM.

## Patentansprüche

1. Verfahren zur Verwaltung von Verbindungszuständen mindestens zweier Abonnements in einer Routing-Vorrichtung (1001), wobei jedes Abonnement mit einer dedizierten Verbindung assoziiert ist, wobei die assoziierte Verbindung eines ersten Abonnements in einem verbundenen Zustand ist, wobei die assoziierte Verbindung eines zweiten Abonnements in einem inaktiven oder getrennten Zustand ist, und wobei das Verfahren in der Routing-Vorrichtung durchgeführt wird und die folgenden Schritte umfasst:
- Überwachen (S1) mindestens eines Parameters, der einen Status der assoziierten Verbindung anzeigt, für ein erstes Abonnement;
- Bestimmen (S2), ob der mindestens eine Parameter eine Bedingung erfüllt; und
- Trennen (S3), wenn der Bestimmungsschritt affirmativ ist, der assoziierten Verbindung für das erste Abonnement in den inaktiven oder getrennten Zustand und Initiieren (S4) der assoziierten Verbindung für das zweite Abonnement in den verbundenen Zustand.

2. Verfahren nach Anspruch 1, wobei:
i) der mindestens eine Parameter assoziiert ist mit mindestens einem von:
- einem Status einer zellularen Verbindung,
- einer Datenrate,
- einer geographischen Position,
- einer vorbestimmten Datenmenge, die mit dem ersten Abonnement assoziiert ist, und
- einem Hardware, HW,- oder Software, SW,-Status eines Modems (10019, 10019a, 1009b) der Routing-Vorrichtung; oder
ii) der mindestens eine Parameter mit jeweiligen vorbestimmten Datenmengen assoziiert ist, die mit den assoziierten Verbindungen der ersten und zweiten Abonnements assoziiert sind, und die Bedingung ist, dass die vorbestimmte Datenmenge, die mit dem ersten Abonnement assoziiert, erreicht wurde.

3. Verfahren nach Anspruch 2, wobei,
i) wenn der mindestens eine Parameter mit dem Status der zellularen Verbindung assoziiert ist, es sich bei dem mindestens einen Parameter um mindestens eines handelt von:
- Kanalqualität, in welchem Fall die Bedingung ist, dass ein Maß der Kanalqualität unter eine gegebene Schwelle abfällt,
- Inter-Funkzugangstechnologie-Handover IRAT-HO, in welchem Fall die Bedingung ein Übergang der RAT von LTE/HS (Long Term Evolution/High Speed) zu GMS (Globales System für mobile Kommunikation), GPRS (allgemeiner paketvermittelter Funkdienst) oder EGPRS (Erweiterter GPRS) ist, und
- Überwachung auf Funkverbindungsausfall, RLF, in welchem Fall die Bedingung ein Wert "RFL wahr" ist; oder,
ii) wenn der mindestens eine Parameter mit einer Datenrate assoziiert ist, der mindestens eine Parameter eine Datenrate ist, die von einer Kommunikationseinheit (10019) an eine Nahbereichs-Kommunikationseinheit (100110) innerhalb der Routing-Vorrichtung geliefert wird, in welchem Fall die Bedingung ist, dass ein Maß der Datenrate unter eine gegebene Schwelle abfällt; oder,
iii) wenn der mindestens eine Parameter mit dem HW- oder SW-Status des Modems assoziiert ist, der mindestens eine Parameter ein Betriebszustand des Modems ist, in welchem Fall die Bedingung ein Wert "Absturzzustand = wahr" ist.

4. Verfahren nach Anspruch 3, wobei für Alternative i), falls der mindestens eine Parameter Kanalqualität ist, ein Maß für die Kanalqualität mindestens eines ist von:
- einem Empfangssignalstärkeindikator, RSSI;
- einer Empfangssignalcodeleistung, RSCP;
- einem Signal-zu-Rausch-Verhältnis, SNR;
- einem Signal-zu-Interferenz-Verhältnis, SIR;
- einem Signal-zu-Interferenz-plus-Rausch-Verhältnis, SNIR;
- einer Referenzsignalempfangsleistung, RSRP;
- einer Referenzsignalempfangsqualität, RSRQ; und
- einem Kanalqualitätsindikator, CQI.

5. Verfahren nach Anspruch 1, 2, Alternative i), 3, Alternative i) und ii), und 4, wobei die gegebene Schwelle für Kanalqualität/Datenrate auf Verlaufsinformationen über Verkehr über die assoziierte Verbindung des ersten Abonnements basiert.

6. Verfahren nach Anspruch 5, wobei die gegebene Schwelle ferner auf Positionsinformationen der Routing-Vorrichtung basiert.

7. Verfahren nach Anspruch 1, wobei der mindestens eine Parameter mit jeweiligen Durchsätzen assoziiert ist, die mit den assoziierten Verbindungen der ersten und zweiten Abonnements assoziiert sind, und die Bedingung ist, dass ein Durchsatz, der mit dem zweiten Abonnement assoziiert ist, höher als ein Durchsatz ist, der mit dem ersten Abonnement assoziiert ist.

8. Verfahren nach Anspruch 7, wobei:
der Durchsatz ferner auf Positionsinformationen der Routing-Vorrichtung basiert; und/oder
der assoziierte Durchsatz der ersten und zweiten Abonnements ferner auf Informationen in einer Datenbank basiert.

9. Verfahren nach einem der Ansprüche 1 bis 8, wobei:
der Trennschritt eine Verbindungsfreigabeprozedur umfasst; und/oder
der Verbindungsschritt eine Verbindungsaufbauprozedur umfasst.

10. Computerprogrammprodukt, das Programmcodeabschnitte zum Durchführen des Verfahrens nach einem der vorhergehenden Ansprüche, wenn das Computerprogrammprodukt auf einer oder mehreren Computervorrichtungen ausgeführt wird, umfasst und vorzugsweise auf einem computerlesbaren Aufzeichnungsmedium gespeichert ist.

11. Routing-Vorrichtung (1001) zum Verwalten von Verbindungszuständen mindestens zweier Abonnements in der Routing-Vorrichtung, wobei jedes Abonnement mit einer dedizierten Verbindung assoziiert ist, wobei die assoziierte Verbindung eines ersten Abonnements in einem verbunden Zustand ist, wobei die assoziierte Verbindung eines zweiten Abonnements in einem inaktiven oder getrennten Zustand ist, und wobei die Routing-Vorrichtung mindestens ein Verarbeitungsmittel (10011) umfasst, das konfiguriert ist zum:
- Überwachen mindestens eines Parameters, der einen Status der assoziierten Verbindung anzeigt, für ein erstes Abonnement;
- Bestimmen, ob der mindestens eine Parameter eine Bedingung erfüllt; und
- Trennen, wenn der Bestimmungsschritt affirmativ ist, der assoziierten Verbindung für das erste Abonnement in den inaktiven oder getrennten Zustand und Initiieren der assoziierten Verbindung für das zweite Abonnement in den verbundenen Zustand.

12. Vorrichtung nach Anspruch 11;
i) ferner umfassend eine interne Kommunikationseinheit (10019); oder
ii) wobei die Vorrichtung mit mindestens zwei externen Modems (10019a, 10019b) verbunden ist, die jeweils mit einem jeweiligen Abonnement assoziiert sind.

13. Vorrichtung nach Anspruch 12, wobei in Alternative ii) die Trenn- und Initiierungsvorgänge ein Wechseln von einem ersten externen Modem zu einem zweiten externen Modem umfassen.

14. Vorrichtung nach einem der Ansprüche 11 bis 13, ferner umfassend:
Mittel (100113) zum Unterbringen mindestens zweier Teilnehmerkennungsmodul, SIM,-Karten; oder
Mittel (100113) zum Unterbringen mindestens zweier Teilnehmerkennungsmodule, SIM.

15. Vorrichtung nach Anspruch 12, Alternative ii), oder 13, ferner umfassend:
Mittel (10018) zum Unterbringen mindestens eines virtuellen Teilnehmerkennungsmoduls, SIM.

16. Vorrichtung nach Anspruch 15, wobei ein SIM in der Vorrichtung untergebracht ist und das virtuelle SIM für eine externe Kommunikationsvorrichtung (1003, 1004) bildet, die mit dem SIM assoziiert ist.

## Revendications

1. Procédé de gestion d'états de connexion d'au moins deux abonnements dans un appareil d'acheminement (1001), dans lequel chaque abonnement est associé à une connexion dédiée, dans lequel la connexion associée d'un premier abonnement est dans un état connecté, dans lequel la connexion associée d'un deuxième abonnement est dans un état inactif ou détaché, et dans lequel le procédé est effectué dans l'appareil d'acheminement et comprend les étapes de :
- la surveillance (S1), pour un premier abonnement, d'au moins un paramètre indicatif d'un statut de la connexion associée ;
- la détermination (S2) si l'au moins un paramètre remplit une condition ; et
- si l'étape de la détermination est affirmative, la déconnexion (S3) de la connexion associée pour le premier abonnement dans l'état inactif ou détaché, et le lancement (S4), pour le deuxième abonnement, de la connexion associée dans l'état connecté.

2. Procédé selon la revendication 1, dans lequel :
i) l'au moins un paramètre est associé à au moins l'un de :
- un statut d'une connexion cellulaire,
- un débit de données,
- une position géographique,
- une quantité de données prédéterminée associée au premier abonnement, et
- un statut matériel, HW, ou logiciel, SW, d'un modem (10019, 10019a, 1009b) de l'appareil d'acheminement ; ou
ii) l'au moins un paramètre est associé à des quantités de données prédéterminées respectives associées aux connexions associées des premier et deuxième abonnements, et la condition est que la quantité de données prédéterminée associée au premier abonnement soit atteinte.

3. Procédé selon la revendication 2, dans lequel :
i) si l'au moins un paramètre est associé au statut de la connexion cellulaire, l'au moins un paramètre est au moins l'un de :
- la qualité de canal, auquel cas la condition est une mesure de la qualité de canal devenant inférieure à un seuil donné,
- un transfert intercellulaire inter-technologies d'accès radio, IRAT-HO, auquel cas la condition est une transition de la RAT de l'évolution à long terme/grande vitesse, LTE/HS, au système mondial de communications mobiles, GSM, au système radio en paquet général, GPRS, ou au GPRS amélioré, eGPRS, et
- la surveillance de panne de liaison radio, RLF, auquel cas la condition est une valeur « RLF true » ; ou
ii) si l'au moins un paramètre est associé à un débit de données, l'au moins un paramètre est un débit de données délivré d'une unité de communication (10019) à une unité de communication de courte portée (100110) à l'intérieur de l'appareil d'acheminement, auquel cas la condition est une mesure du débit de données devant inférieure à un seuil donné ; ou
iii) si l'au moins un paramètre est associé au statut HW ou SW du modem, l'au moins un paramètre est un état de fonctionnement du modem, auquel cas la condition est une valeur « crash state = true ».

4. Procédé selon la revendication 3, dans lequel, pour la variante i), dans le cas dans lequel l'au moins un paramètre est une qualité de canal, une mesure de la qualité de canal est au moins l'un de :
- un indicateur de force de signal reçu, RSSI ;
- une puissance de code de signal reçu, RSCP ;
- un rapport de signal sur bruit, SNR ;
- un rapport de signal sur interférence, SIR ;
- un rapport de signal sur interférence plus bruit, SNIR ;
- une puissance reçue de signal de référence, RSRP ;
- une qualité reçue de signal de référence, RSRQ ; et
- un indicateur de qualité de canal, CQI.

5. Procédé selon l'une quelconque des revendications 1, 2, variante i), 3, variantes i) et ii), et 4, dans lequel le seuil donné de débit de données de qualité de canal est basé sur des informations historiques de trafic sur la connexion associée du premier abonnement.

6. Procédé selon la revendication 5, dans lequel le seuil donné est en outre basé sur des informations de position de l'appareil d'acheminement.

7. Procédé selon la revendication 1, dans lequel l'au moins un paramètre est associé à des rendements respectifs associés aux connexions associées des premier et deuxième abonnements, et la condition est qu'un rendement associé au deuxième abonnement soit supérieur à un rendement associé au premier abonnement.

8. Procédé selon la revendication 7, dans lequel :
le rendement est en outre basé sur des informations de position de l'appareil d'acheminement ; et/ou
le rendement associé des premier et deuxième abonnements est en outre basé sur des informations dans une base de données.

9. Procédé selon l'une quelconque des revendications 1 à 8, dans lequel :
l'étape de la déconnexion implique une procédure de libération de connexion ; et/ou
l'étape de la connexion implique une procédure de configuration de connexion.

10. Produit de programme informatique comprenant des portions de code de programme pour effectuer le procédé selon l'une quelconque des revendications précédentes, lorsque le produit de programme informatique est exécuté sur un ou plusieurs dispositifs informatiques, de préférence mémorisé sur un support d'enregistrement lisible par ordinateur.

11. Appareil d'acheminement (1001) destiné à la gestion d'états de connexion d'au moins deux abonnements dans l'appareil d'acheminement, dans lequel chaque abonnement est associé à une connexion dédiée, dans lequel la connexion associée d'un premier abonnement est dans un état connecté, dans lequel la connexion associée d'un deuxième abonnement est dans un état inactif ou détaché, et dans lequel l'appareil d'acheminement comprend au moins un moyen de traitement (10011) configuré pour :
- la surveillance, pour un premier abonnement, d'au moins un paramètre indicatif d'un statut de la connexion associée ;
- la détermination si l'au moins un paramètre remplit une condition ; et
- si l'opération de la détermination est affirmative, la déconnexion de la connexion associée pour le premier abonnement dans l'état inactif ou détaché, et le lancement, pour le deuxième abonnement, de la connexion associée dans l'état connecté.

12. Appareil selon la revendication 11,
i) comprenant en outre une unité de communication interne (10019) ; ou
ii) dans lequel l'appareil est connecté à au moins deux modems externes (10019a, 10019b), chacun d'eux étant associé à un abonnement respectif.

13. Appareil selon la revendication 12, dans lequel, à la variante ii), les opérations de la déconnexion et du lancement impliquent la commutation d'un premier modem externe à un deuxième modem externe.

14. Appareil selon l'une quelconque des revendications 11 à 13, comprenant en outre :
des moyens (100113) pour prendre en charge au moins deux cartes de module d'identité d'abonné, SIM ; ou
des moyens (100113) pour prendre en charge au moins deux modules d'identité d'abonné, SIM, logiciels.

15. Appareil selon la revendication 12, variante ii, ou 13, comprenant en outre des moyens (10018) pour prendre en charge au moins un module d'identité d'abonné, SIM, virtuel.

16. Appareil selon la revendication 15, dans lequel un SIM est pris en charge dans l'appareil et constitue le SIM virtuel pour un dispositif de communication externe (1003, 1004) qui est associé au SIM.
